# EUROPEAN PATENT APPLICATION

(11) **EP 4 491 371 A1**
(43) Date of publication of application: **15.01.2025**
(21) Application number: 23766394.3
(22) Date of filing: 08.02.2023
(51) Int. Cl.: B29C 55/02, B05B 1/02, F27D 7/06

(54) **BLOWING-OUT NOZZLE**

(30) Priority: 07.03.2022 JP 2022034280
(71) Applicant: Toray Industries, Inc., Tokyo 103-8666 (JP)
(72) Inventor: MAKI, Akihisa, Otsu-shi, Shiga 520-8558 (JP)
(74) Representative: Hoefer & Partner Patentanwälte mbB
(86) International application number: PCT/JP2023/004121
(87) International publication number: WO 2023/171214

(57) **Abstract**

A blowoff nozzle according to the present invention is a blowoff nozzle that blows out air to a film being conveyed, the blowoff nozzle including first and second inscribed portions provided inside the blowoff nozzle, spaced apart in a film conveyance direction, and spaced from a virtual plane passing through an opening portion surface of an opening portion of the blowoff nozzle, the opening portion surface being a surface from which the air is blown out, in which the first and second inscribed portions have inclined surfaces inclined with respect to the virtual plane, respectively, and the two inclined surfaces are inclined to approach each other toward the virtual plane.

## Description

### Field

The present invention relates to a blowoff nozzle.

### Background

As methods for manufacturing stretched films made of thermoplastic resin, a sequential biaxial stretching method and a simultaneous biaxial stretching method are known. In the sequential biaxial stretching method, an unstretched film made of thermoplastic resin is stretched in a longitudinal direction thereof to obtain a uniaxially stretched film, and the obtained uniaxially stretched film is put into a tenter oven and is stretched in the tenter oven in a width direction thereof. In the simultaneous biaxial stretching method, an unstretched film made of thermoplastic resin is put into a tenter oven and is stretched in the tenter oven in a longitudinal direction and a width direction thereof simultaneously.

Stretched films made of thermoplastic resin are widely used for various industrial material purposes such as packaging purpose. Among such films, sequential biaxially stretched films made of polyester, polyolefin, or polyamide resin are widely used in purposes where unstretched films are not usable, due to excellent mechanical characteristics, thermal characteristics, electrical characteristics, and the like, and the demand for the sequential biaxially stretched films has been increasing.

A problem with a tenter oven for manufacturing a stretched film made of thermoplastic resin is a phenomenon in which circulation of air is not completed in a chamber constituting the tenter oven such that air with a different set temperature flows into the chamber, outside air from the outside of the tenter oven flows into the oven, or air in the chamber of the tenter oven is blown out of the oven. All of such phenomena are phenomena in which air flows along a running direction of the film, and such a flow of air is referred to as a machine direction (MD) flow. The MD flow is caused by an airflow that accompanies the film when the film is conveyed, a discrepancy between an amount of heated air supplied into the tenter oven and an amount of air exhausted from the tenter oven, and the like.

If the MD flow is generated, incoming air with a different temperature flowing from the outside of the chamber is mixed with heated air in the chamber while flowing near the film, and thus, the efficiency of heating the film is uneven, and extensive temperature unevenness occurs in the film. In the tenter oven, at least one process is performed among a preheating process of increasing the film to a desired temperature, a stretching process of extending the film to a desired width, a heat fixing process of performing thermal treatment to the film at a desired temperature, and a cooling process of cooling the film at a desired temperature. If the temperature unevenness occurs in the film during any of such process, the temperature unevenness results in thickness unevenness and characteristic unevenness of the film, and the product quality deteriorates. In addition to the deterioration of the product quality, the film may be torn in the tenter oven, and productivity may be reduced.

As a technique for restraining the MD flow with a different ambient temperature from flowing into and out of an adjacent chamber, Patent Literature 1 discloses a technique that blows out air toward a film surface with an blowoff nozzle inside an airflow control apparatus provided adjacent to the tenter oven and blocks the MD flow with an air curtain.

Here, in a stretched film manufacturing apparatus, it is desirable to provide the film and the blowoff nozzle away from each other, from the viewpoint of the configuration of the apparatus. As a technique that restrains the MD flow from flowing into and out of an adjacent chamber even when the film and the blowoff nozzle are provided away from each other, Patent Literature 2 discloses a blowoff nozzle that includes inscribed portions having inclined surfaces inclined to approach each other near a nozzle blowoff opening portion.

### Citation List

### Patent Literature

Patent Literature 1: WO 2017/115654 A
Patent Literature 2: WO 2021/075282 A

### Summary

### Technical Problem

By the way, in the blowoff nozzle that is used to restrain the MD flow with a different ambient temperature at an entrance and/or an exit of the tenter oven, air heated by a heat exchanger or the like is blown out toward the film. In particular, on the entrance side of the tenter oven, heated air is blown out from the blowoff nozzle to convey the film from an entrance of the airflow control apparatus provided adjacent to the tenter oven into the tenter oven while maintaining a film temperature without cooling or while heating. Accordingly, to reduce energy required for heating hot air blown out from the blowoff nozzle, an amount of air blown out from the blowoff nozzle is desirably small, and there is room for improvement in the technique disclosed in Patent Literature 2.

The present invention has been accomplished in view of the above-described problem, and provides a blowoff nozzle in which an amount of air blown out from the blowoff nozzle is reduced, so that energy required for heating air can be reduced, and even if a distance from a film is increased, temperature unevenness can be suppressed. Solution to Problem

The present invention to solve the above-described problem provides a blowoff nozzle that blows out air to a film being conveyed, the blowoff nozzle comprising: first and second inscribed portions provided inside the blowoff nozzle, spaced apart in a film conveyance direction, and spaced from a virtual plane passing through an opening portion surface of an opening portion of the blowoff nozzle, the opening portion surface being a surface from which the air is blown out, wherein the first and second inscribed portions have inclined surfaces inclined with respect to the virtual plane, respectively, and the two inclined surfaces are inclined to approach each other toward the virtual plane.

In the blowoff nozzle according to present invention, it is preferable that a distance y1 [mm] from the virtual plane to the first inscribed portion satisfies y1 ≥ 0.5 mm, and a distance y2 [mm] from the virtual plane to the second inscribed portion satisfies y2 ≥ 0.5 mm.

In the blowoff nozzle according to present invention, it is preferable that the distance y1 [mm], a distance w1 [mm] from an end of an inner wall surface of the blowoff nozzle on an opening portion side to the first inscribed portion, and an angle θ1 [deg] between the virtual plane and the inclined surface of the first inscribed portion satisfy y1 ≤ w1·cosθ1, and the distance y2 [mm], a distance w2 [mm] from the end of the inner wall surface of the blowoff nozzle on the opening portion side to the second inscribed portion, and an angle θ2 [deg] between the virtual plane and the inclined surface of the second inscribed portion satisfy y2 ≤ w2·cosθ2.

In the blowoff nozzle according to present invention, it is preferable that, in a cross-sectional view viewed from a film width direction, a center axis of a flow passage between the first inscribed portion and the second inscribed portion passes through a center of the opening portion.

In the blowoff nozzle according to present invention, it is preferable that two side surfaces of the blowoff nozzle near the virtual plane are inclined surfaces inclined to approach each other toward the virtual plane. Advantageous Effects of Invention

According to the present invention, the amount of air blown out from the blowoff nozzle is reduced, so that energy required for heating air can be reduced, and even if the distance from the film is increased, temperature unevenness can be suppressed.

### Brief Description of Drawings

FIG. 1 is a diagram illustrating a schematic configuration of a film manufacturing apparatus including a blowoff nozzle according to an embodiment of the present invention.
FIG. 2 is a diagram illustrating a configuration of the blowoff nozzle according to the embodiment of the present invention.
FIG. 3 is a diagram illustrating a configuration of a blowoff nozzle according to another embodiment of the present invention.
FIG. 4 is a diagram illustrating a configuration of a blowoff nozzle according to another embodiment of the present invention.
FIG. 5 is a diagram illustrating a numerical analysis model used in Analysis Example 1 and Analysis Example 2. Description of Embodiments

Hereinafter, a mode for carrying out the present invention will be described in detail with the drawings. Note that the present invention is not limited to the following embodiments. The drawings referred to in the following description only schematically illustrate shapes, sizes, and positional relationships to such an extent that the contents of the present invention can be understood. That is, the present invention is not limited only to the shapes, sizes, and positional relationships exemplified in the drawings. In the description of the drawings, same portions are represented by same reference signs.

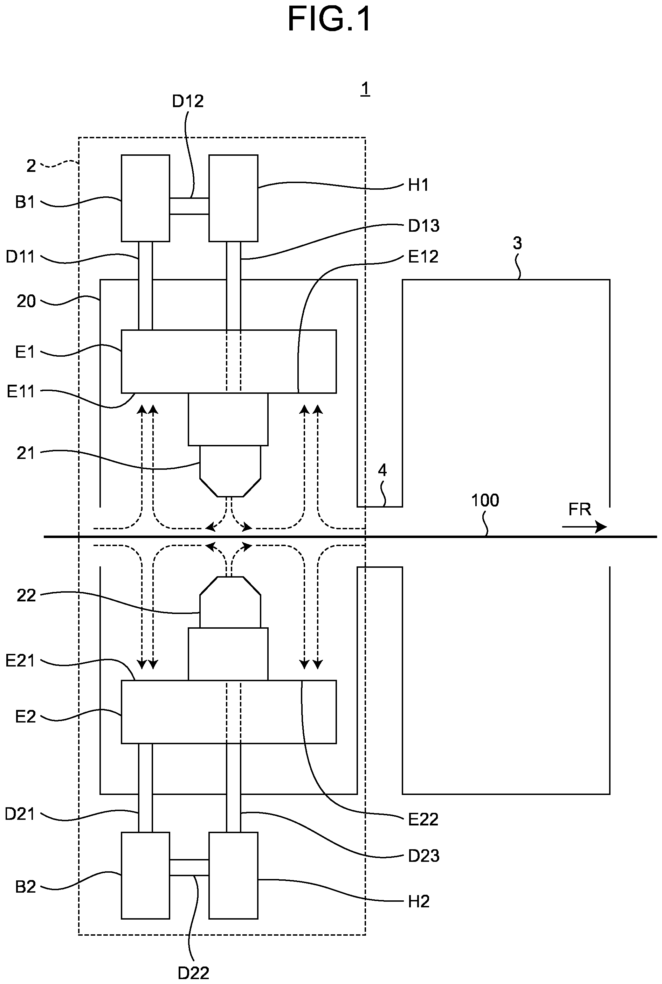

FIG. 1 is a diagram illustrating a schematic configuration of a film manufacturing apparatus including a blowoff nozzle according to an embodiment of the present invention. A film manufacturing apparatus 1 illustrated in FIG. 1 includes an airflow control apparatus 2 and a tenter oven 3. The film manufacturing apparatus 1 is a manufacturing apparatus for stretched films that employs a sequential biaxial stretching method or a simultaneous biaxial stretching method, and puts a film 100 made of thermoplastic resin into the tenter oven 3 and stretches the film 100 in at least one of a longitudinal direction and a width direction in the tenter oven 3. In FIG. 1, the longitudinal direction of the film 100 is a conveyance direction FR of the film and corresponds to a left-right direction in the drawing. The width direction of the film 100 (film width direction) is a direction perpendicular to the longitudinal direction and a thickness direction (an up-down direction on the paper surface) of the film 100, and corresponds to a direction perpendicular to the paper surface.

The airflow control apparatus 2 is provided in a pre-stage of the tenter oven 3 with respect to the conveyance direction FR of the film 100. After passing through the airflow control apparatus 2, the film 100 to be stretched is put into the tenter oven 3. The airflow control apparatus 2 is connected to the tenter oven 3 via a connecting section 4.

The film 100 that can be applied to the airflow control apparatus 2 of the present invention is not particularly limited, and a known thermoplastic resin film that is heated and stretched in the tenter oven 3 can be applied.

The inside of the tenter oven 3 is heated to a set temperature when the film 100 is to be stretched. The tenter oven 3 has one end connected to the connecting section 4, and has the other end in which an opening is formed for conveying the film 100 to the outside.

The airflow control apparatus 2 includes a first blowoff nozzle 21 provided to face one surface (in FIG. 1, upper surface) of the film 100, and a second blowoff nozzle 22 provided to face the other surface (in FIG. 1, lower surface) of the film 100. Hereinafter, the "first blowoff nozzle 21" is simply referred to as a "blowoff nozzle 21". The "second blowoff nozzle 22" is simply referred to as a "blowoff nozzle 22". The blowoff nozzles 21 and 22 blow out air to the respective surfaces of the film 100 facing the blowoff nozzles 21 and 22. The blowoff nozzles 21 and 22 are housed in a box-shaped body 20. The box-shaped body 20 has one end in the conveyance direction FR of the film 100 connected to the connecting section 4, and has the other end in which an opening is formed for conveying the film 100 from the outside. Although a pair of blowoff nozzles facing each other is effective, effectiveness can be improved by providing a plurality of pairs of the blowoff nozzles.

In the airflow control apparatus 2, as a supply source of air to the blowoff nozzles 21 and 22, blowers B1 and B2, heat exchangers H1 and H2, exhaust mechanisms E1 and E2, and ducts D11, D12, D13, D21, D22, and D23 are provided. The blower B1 blows air sucked from the exhaust mechanism E1 to the heat exchanger H1 via the ducts D11 and D12. The air heated by the heat exchanger H1 is blown out from the blowoff nozzle 21 via the duct D13. In the exhaust mechanism E1, exhaust units E11 and E12 that suck the air blown out of the blowoff nozzle 21 or air carried by the MD flow are formed. The blower B2, the heat exchanger H2, the exhaust mechanism E2, and the ducts D21, D22, and D23 have similar functions to the blower B1, the heat exchanger H1, the exhaust mechanism E1, and the ducts D11, D12, and D13 described above, respectively, and in the exhaust mechanism E2, exhaust units E21 and E22 are formed.

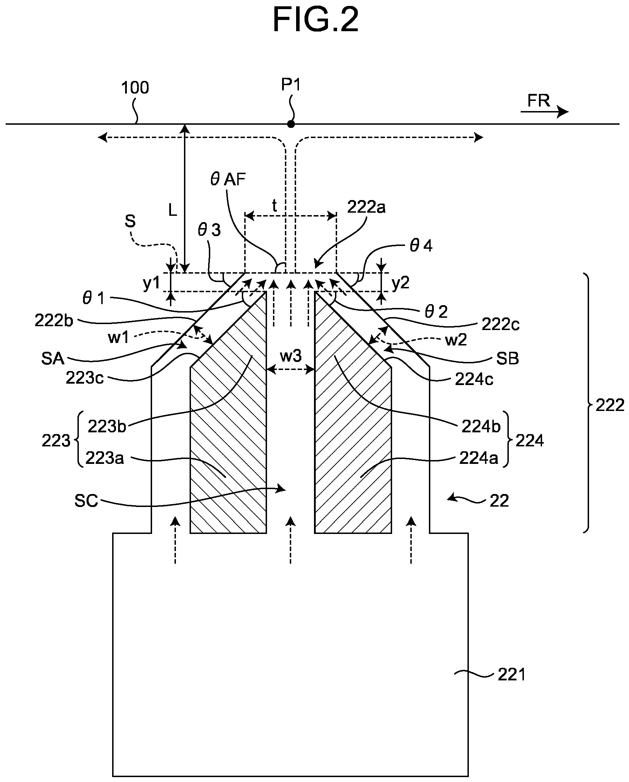

Subsequently, a configuration of the blowoff nozzle will be described. FIG. 2 is a diagram illustrating a configuration of the blowoff nozzle according to the present embodiment. In FIG. 2, although the configuration of the blowoff nozzle 22 will be described as an example, the blowoff nozzle 21 has a similar configuration. The blowoff nozzle 22 includes a pressure equalizing chamber 221 to which air is supplied from the duct D23, a blowoff portion 222 that extends from the pressure equalizing chamber 221 and blows out air to the outside, and a first flow divider unit 223 and a second flow divider unit 224 that are provided in the blowoff nozzle 22 and divides a flow passage of the air blown out from the blowoff portion 222.

In the blowoff portion 222, an opening portion 222a through which the air is blown out is formed on a side opposite to a side connected to the pressure equalizing chamber 221. The opening portion 222a is formed as a slit extending in the film width direction. The opening portion 222a may be a plurality of hole shapes arranged in the film width direction, instead of a slit shape. The opening portion 222a extends in parallel with the conveyance direction FR of the film 100.

The first flow divider unit 223 and the second flow divider unit 224 are arranged to be spaced apart in the conveyance direction FR of the film 100 inside the blowoff nozzle 22, and end portions on an opening portion 222a side have inclined surfaces inclined to approach each other toward the opening portion 222a. Specifically, the first flow divider unit 223 includes a first base portion 223a that extends in a prism-like shape from the pressure equalizing chamber 221, and a first inscribed portion 223b that extends from the first base portion 223a to the opening portion 222a side. The second flow divider unit 224 includes a second base portion 224a that extends in a prism-like shape from the pressure equalizing chamber 221, and a second inscribed portion 224b that extends from the second base portion 224a to the opening portion 222a side. In the first inscribed portion 223b and the second inscribed portion 224b, inclined surfaces 223c and 224c are formed to be inclined with respect to a virtual plane S that passes through an opening portion surface of the opening portion 222a and is parallel to the opening portion surface. The inclined surfaces 223c and 224c are inclined to approach each other toward the opening portion 222a. The flow divider units 223 and 224 have outer edges in a quadrangular shape in a cross section illustrated in FIG. 2. The virtual plane S is parallel to the conveyance direction FR.

Here, a distance from a tip of the blowoff portion 222 to the film 100 is denoted as L, an angle between the inclined surface of the first flow divider unit 223 (in FIG. 2, the inclined surface 223c) and the virtual plane S is denoted as θ1 (> 0), an angle between the inclined surface of the second flow divider unit 224 (in FIG. 2, the inclined surface 224c) and the virtual plane S is θ2 (> 0), a gap of the opening portion 222a in the conveyance direction FR is denoted as t, a distance between the inclined surface 223c of the first inscribed portion 223b and a side surface 222b of the blowoff nozzle near the virtual plane S is denoted as w1, a distance between the inclined surface 224c of the second inscribed portion 224b and a side surface 222c of the blowoff nozzle near the virtual plane S is denoted as w2, a distance between the first inscribed portion 223b and the second inscribed portion 224b is denoted as w3, a distance between the first inscribed portion 223b and the virtual plane S is denoted as y1, and a distance between the second inscribed portion 224b and the virtual plane S is denoted as y2. The distances L, t, w1, w2, w3, y1, and y2 and the angles θ1 and θ2 are determined based on a set pressure at a stagnation point P1 of air. The set pressure is set to, for example, 60 Pa, but may be set to any pressure equal to or higher than a pressure by which the MD flow can be blocked, and is not limited to 60 Pa. The stagnation point P1 corresponds to a position of stagnation on the film 100 caused by the air blown out from the blowoff portion 222.

An airflow in the blowoff nozzles 21 and 22 will be described using the blowoff nozzle 22 as an example. The air (hot wind) supplied to the pressure equalizing chamber 221 via the duct D23 passes through a flow passage SC formed by the first flow divider unit 223 and the second flow divider unit 224 and is blown out from the opening portion 222a toward the film 100. Here, the flow of the air that is blown out from the opening portion 222a is controlled by the flow divider units 223 and 224. Specifically, air that flows on an upstream side of the conveyance direction FR flows to a downstream side in an inclined manner with respect to the film 100 along the inclined surface 223c (flow passage SA) provided in the first inscribed portion 223b. In contrast, air that flows on the downstream side of the conveyance direction FR flows to the upstream side in an inclined manner with respect to the film 100 along the inclined surface 224c (flow passage SB) provided in the second inscribed portion 224b. Air that flows through the center of the conveyance direction FR passes through the flow passage SC formed by the first inscribed portion 223b and the second inscribed portion 224b, and flows toward the opening portion 222a. The air flowing from the upstream side and the downstream side of the conveyance direction FR in an inclined manner and the air flowing through the center of the conveyance direction FR travel in directions crossing each other and are merged inside the blowoff nozzle 22. With the merging, an air pressure and an air volume per unit time are increased, and the air is blown out from the opening portion 222a toward the film 100.

In the present embodiment, the first flow divider unit 223 and the second flow divider unit 224 are provided inside the blowoff nozzle 22 while being spaced from the virtual plane S. Accordingly, at least part of the air along the first flow divider unit 223 and the second flow divider unit 224 can be merged before being blown out from the opening portion 222a. As a result, reduction of a velocity of the air along the inclined surfaces 223c and 224c due to viscous friction against still air existing between the blowoff nozzle 22 and the film 100 can be suppressed, and an effect of increasing the air pressure and the air volume per unit time after merging can be increased. Furthermore, since the velocity of air blown out from the blowoff portion 222 toward the film 100 can be increased with an increase in air pressure after merging, an entrained amount of a still fluid between the blowoff portion 222 and the film 100 by the air blown out from the blowoff portion 222 is also increased, and even when a comparatively small amount of air is supplied to the blowoff nozzle 22, the pressure at the stagnation point P1 can be increased.

In the present embodiment, desirably, the distance y1 [mm] from the virtual plane S to the first inscribed portion 223b satisfies y1 ≥ 0.5 mm, and the distance y2 [mm] from the virtual plane S to the second inscribed portion 224b satisfies y2 ≥ 0.5 mm. Lower limits of the distances y1 and y2 may have lengths enough for at least part of the air along the flow divider units 223 and 224 to be merged inside the blowoff nozzle 22 rather than the opening portion 222a, are desirably equal to or greater than 0.5 mm, and are more desirably equal to or greater than 2 mm.

In addition, in the present embodiment, desirably, the above-described distance y1 [mm], the distance w1 [mm] from an end of an inner wall surface of the blowoff nozzle 22 on the opening portion 222a side to the first inscribed portion 223b, and the angle θ1 [deg] between the virtual plane S and the inclined surface 223c satisfy y1 ≤ w1·cosθ1, and the above-described distance y2 [mm], the distance w2 [mm] from the end of the inner wall surface of the blowoff nozzle 22 on the opening portion 222a side to the second inscribed portion 224b, and the angle 02 [deg] between the virtual plane S and the inclined surface 224c satisfy y2 ≤ w2·cosθ2. If the distance y1 is equal to or less than w1·cosθ1, and the distance y2 is equal to or less than w2·cosθ2, resistance when the air flows inside the blowoff nozzle is reduced, and the effect of the increase in air pressure by air merging is further exhibited, and the pressure at the stagnation point P1 can be increased.

The distance w1 and the distance w2, the distance y1 and the distance y2, and the angle θ1 and the angle θ2 desirably have the same magnitudes, respectively. Accordingly, the flow of air inside the nozzle is symmetrical based on a center axis of the blowoff nozzle, a difference between flow rates of air along the inclined surfaces of the first and second inscribed portions is less likely to occur, and the air after merging easily goes straight toward the film.

A center axis of the flow passage SC formed between the first inscribed portion 223b and the second inscribed portion 224b desirably passes through the center of the conveyance direction FR of the opening portion 222a. Accordingly, the flow of air inside the nozzle is symmetrical based on a center axis of the blowoff nozzle 22, a difference between flow rates of air along the inclined surfaces 223c and 224c of the first and second inscribed portions 223b and 224b is less likely to occur, and the air after merging easily goes straight toward the film 100.

The two side surfaces 222b and 222c of the blowoff nozzle 22 near the virtual plane S are desirably inclined surfaces inclined to approach each other toward the virtual plane **S.** In FIG. 2, angles between the side surfaces 222b and 222c and the virtual plane S are denoted as θ3 and θ4. Air flowing from the pressure equalizing chamber 221 toward the opening portion 222a of the blowoff nozzle 22 is redirected along the inclined surfaces of the first inscribed portion 223b and the second inscribed portion 224b by the Coanda effect. Here, the flow passages SA and SB are formed by the first inscribed portion 223b and the second inscribed portion 224b, and the two side surfaces 222b and 222c, and the two flow passages SA and SB are inclined to approach each other toward the virtual plane, so that it is possible to merge air while allowing air to be concentrated on the center of the blowoff nozzle 22, and an air pressure at an air merging point is increased. Accordingly, even if the amount of air blown out from the blowoff nozzle 22 is suppressed, the pressure at the stagnation point P1 of the air can be increased. In the present embodiment, the side surface 222b and the inclined surface 223c, and the side surface 222c and the inclined surface 224c are parallel, respectively, but may not be parallel. In the present embodiment, although it is premised that both the angle θ3 between the side surface 222b and the virtual plane S and the angle θ4 between the side surface 222c and the virtual plane S have the same magnitude, the angles may not be the same.

In FIG. 2, the side surfaces that face each other in the first flow divider unit 223 and the second flow divider unit 224 are illustrated as being substantially parallel, but since the arrangement of the side surfaces is determined based on the set pressure at the stagnation point P1 of the air, the arrangement of the side surfaces is not particularly limited.

Subsequently, ways of flowing of the air blown out from the blowoff nozzles 21 and 22 will be described using the blowoff nozzle 22 as an example. The air blown out from the blowoff nozzle 22 travels toward the film 100 and hits the film 100. Thereafter, the air flowing to the upstream side and/or the downstream side in the conveyance direction of the film 100 is redirected, collides with air flowing into the box-shaped body 20 to be turned into return air, and is sucked into the exhaust units E21 and E22 (see FIG. 1). The air blown out from the blowoff nozzle 21 is also sucked into the exhaust units E11 and E12 in the same way of flowing. Here, to sufficiently prevent the MD flow and restrain the occurrence of temperature unevenness in the tenter oven, the air blown out from the opening portion 222a toward the film 100 is desirably perpendicular to the film 100. The air blown out toward the film 100 being perpendicular to the film 100 means that an air blowoff angle θAF between a blowoff direction of the air and the virtual plane S is within a range of 90 ± 5 deg, and is more desirably within a range of 90 ± 2 deg.

In the present embodiment, the first flow divider unit 223 and the second flow divider unit 224 are provided inside the blowoff nozzle 22, and the flows along the flow divider units 223 and 224 are merged inside the blowoff nozzle 22, so that the air volume per unit time is increased. Accordingly, the pressure at the stagnation point P1 of the air can be increased, and thus, the air curtain formed by the air blown out from the blowoff nozzle 22 is resilient, and MD flow blocking performance is improved.

In the present embodiment, the first flow divider unit 223 and the second flow divider unit 224 are spaced apart in the conveyance direction FR of the film 100 inside the blowoff nozzle 22 such that the air flows from the flow passage SC formed by the first flow divider unit 223 and the second flow divider unit 224 toward the opening portion 222a. The air flowing from the upstream side and the downstream side of the conveyance direction FR in an inclined manner along the flow divider units 223 and 224 and the air passing through the flow passage SC formed by the flow divider units 223 and 224 are merged inside the blowoff nozzle 22, so that the straightness of the air blown out from the opening portion 222a toward the film increases.

Here, if air flowing into the apparatus along the lower surface of the film 100 from the outside of the apparatus as well as an accompanying flow generated in the conveyance direction FR of the film 100 flows into the box-shaped body 20 through a film conveyance inlet of the airflow control apparatus 2, the air is blocked and redirected by the air curtain formed by the air blown out from the blowoff nozzle 22, and is sucked into the exhaust unit E21 along with the return air. As such, the exhaust unit E21 sucks the air flowing from the outside of the apparatus, so that air flowing from the outside of the airflow control apparatus 2 can be restrained from flowing into the tenter oven 3 and causing temperature unevenness inside the tenter oven 3. The same applies to the air flowing from the film conveyance inlet into the box-shaped body 20 along the upper surface of the film 100 from the outside of the apparatus.

If air flowing out from the tenter oven 3 flows into the box-shaped body 20 along the lower surface side of the film 100 through a conveyance outlet (connecting section 4) of the airflow control apparatus 2, the air is blocked and redirected by the air curtain formed by the air blown out from the blowoff nozzle 22, and is sucked into the exhaust unit E22 along with the return air. As such, the exhaust unit E22 sucks the air flowing from the tenter oven 3, so that the air heated in the chamber of the tenter oven 3 can be restrained from being blown out of the chamber of the tenter oven 3, increasing a temperature of a working area around the tenter oven 3, and deteriorating a working environment around the tenter oven 3. In addition, productivity can be restrained from being reduced due to foreign matter defects caused by deposition and adhesion of sublimates from the film 100 outside the chamber of the tenter oven 3 to the surface of the film 100. The same applies to the air flowing into the box-shaped body 20 along the upper surface of the film 100 from the tenter oven 3.

The blowoff nozzles 21 and 22 are desirably disposed to face the respective surfaces of the film 100. Accordingly, on both the upper surface side and the lower surface side of the film 100, the air flowing into the tenter oven 3 from the outside of the airflow control apparatus 2 or the air heated in the chamber of the tenter oven 3 being blown out of the chamber of the tenter oven 3 can be restrained, and an airflow blocking effect of the blowoff nozzles 21 and 22 can be maximally exerted.

In the embodiment described above, in the blowoff nozzles 21 and 22 that blow out air, the inscribed portions having the inclined surfaces are provided inside the blowoff nozzle divides the air blown out from the blowoff nozzle, and the air is merged inside the blowoff nozzle or between the blowoff nozzle and the film 100 to hit the film 100. The air blown out from the blowoff nozzles 21 and 22 increases in air pressure with merging and forms the air curtain for blocking the MD flow. According to the present embodiment, since the air of which the air pressure is increased with merging hits the film 100, even if the distance between the film 100 and the blowoff nozzle is increased, temperature unevenness can be suppressed.

In the embodiment described above, although the blower B2 is provided as a supply source of air to the blowoff nozzle 22, individual blowers may be provided as air supply sources to the flow passage SA that is formed by the inclined surface 223c of the first inscribed portion and the side surface 222b of the blowoff nozzle near the virtual plane S, the flow passage SB that is formed by the inclined surface 224c of the second inscribed portion and the side surface 222c of the blowoff nozzle near the virtual plane S, and the flow passage SC between the first inscribed portion and the second inscribed portion, respectively. That is, the pressure equalizing chamber 221 that communicates with the flow passages SA, SB, and SC may be also divided in the film conveyance direction, and the individual blowers may be connected as air supply sources.

In the embodiment described above, a configuration may be made in which the first flow divider unit 223 and the second flow divider unit 224 does not include the first base portion 223a and the second base portion 224a. Then, the first inscribed portion 223b and the second inscribed portion 224b are fixed inside the blowoff nozzle 22 while being spaced from the inner wall of the blowoff nozzle 22, for example.

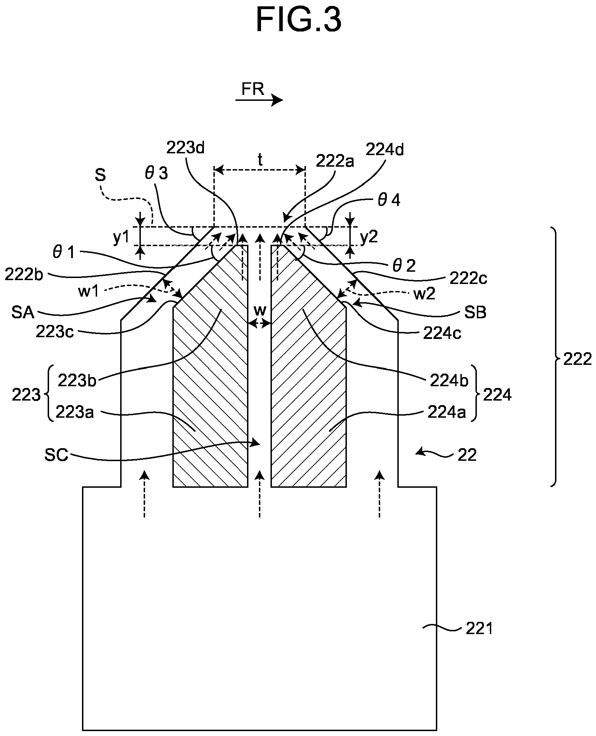

As illustrated in FIG. 3, in the first inscribed portion 223b and the second inscribed portion 224b, planar portions 223d and 224d connected to the inclined surface 223c and the 224c may be formed at one end in the conveyance direction FR of the film 100. The planar portions 223d and 224d desirably have surfaces substantially parallel to the virtual plane S, but may be formed as curved surfaces.

### Examples

Hereinafter, the present invention will be described in more detail with examples. The examples are not intended to limit the interpretation of the present invention in any way.

### [Analysis Example 1]

First, an evaluation method of the effects of the present invention will be described. A numerical analysis model that models the chamber of the airflow control apparatus 2 including the blowoff nozzle of the present invention is created, and the numerical analysis model is numerically calculated to evaluate airflow control performance.

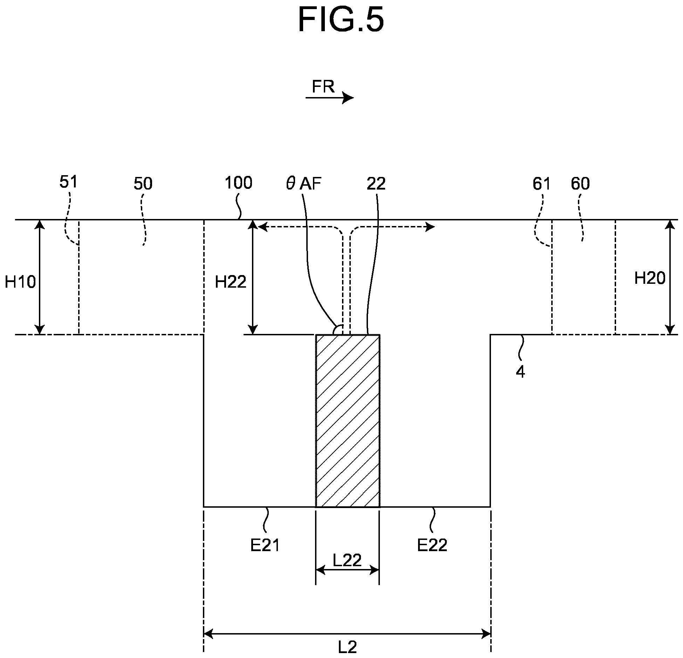

FIG. 5 is a cross-sectional view of the airflow control apparatus 2 in the conveyance direction FR of the film 100 that is used in examples of the present invention. FIG. 5 illustrates a configuration of a lower half part of the airflow control apparatus 2 out of upper and lower half parts separated by a conveyance surface of the film 100 as a boundary. To save calculation resources in calculating the inside of the airflow control apparatus 2, it was assumed that the airflow control apparatus 2 has a shape symmetrical in an up-down direction via the film 100, and only the lower half part was calculated.

The dimensions of each structure were set as follows. The length L2 of the airflow control apparatus 2 in the conveyance direction FR of the film 100 was set to 600 mm, and the blowoff nozzle 22 illustrated in FIG. 2 was provided inside the airflow control apparatus 2. A length L22 of the blowoff nozzle 22 in the conveyance direction FR of the film 100 was set to 200 mm. Lengths of the exhaust units E21 and E22 in the conveyance direction of the film 100 were set to be equal to each other. A height H10 of the entrance of the airflow control apparatus 2 and a distance H20 between the connecting section 4 and the film 100 were set to 150 mm.

In the numerical analysis, steady calculation was performed using "STAR-CCM" (manufactured by IDAJ Co., Ltd.), which is commercially available thermal fluid analysis software. A k-ε turbulence model was used for handling turbulence, and a wall law was used for handling a turbulence boundary layer near a wall. The above-described software analyzed a Navier-Stokes equation, which is a motion equation of a fluid, by a finite volume method. Of course, any thermal fluid analysis software may be used as long as a similar analysis can be performed.

As boundary conditions of an analysis space, an outer boundary 51 of an outer space 50 and an inner boundary 61 of an internal space 60 of the tenter oven 3 connected to the connecting section 4 were set as a pressure boundary, the outer boundary 51 of the outer space 50 was set to atmospheric pressure (0.1 MPa), and the inner boundary 61 of the tenter oven was set to atmospheric pressure -5 Pa. A boundary condition was set to the exhaust units E21 and E22 of the airflow control apparatus 2 such that the same amount as the air volume blown out from the blowoff nozzle 22 is exhausted.

For the effectiveness of the blowoff nozzle 22, an air volume was calculated when a position of the stagnation point P1 of the air that blocks the MD flow and is blown out from the blowoff nozzle 22 toward the film 100 is equal to or less than 10 mm from a center line of the blowoff nozzle 22 in a cross-sectional view in the film width direction. If the position of the above-described stagnation point is equal to or less than 10 mm from the center line of the blowoff nozzle 22, when the distance between the blowoff nozzle 22 and the film 100 is 150 mm, the blowoff angle θAF of the air is 90 + 3.8 deg, and the blowoff angle θAF of the air can be determined to be perpendicular. In respective examples, when the calculated air volume is smaller than that of a comparison target, since the effect of increasing the air volume as the blowoff nozzle is observed, the result was determined as "A", and when the calculated air volume is greater than that of the comparison target, since the effect of increasing the air volume as the blowoff nozzle is not observed, the result was determined as "B". When the blowoff of the entire airflow control apparatus 2 and the exhaust mechanism are stopped, the MD flow flowed at 2.7 m/sec in the film conveyance direction.

### (Example 1)

In the blowoff nozzle 22 illustrated in FIG. 2, an analysis was performed by setting the distance L to 150 mm, the distance w1 to 8 mm, the distance w2 to 8 mm, the distance w3 to 8 mm, the distance y1 to 3.3 mm, the distance y2 to 3.3 mm, the angle θ1 to 45 deg, the angle θ2 to 45 deg, the angle θ3 to 45 deg, and the angle θ4 to 45 deg.

### (Example 2)

An analysis was performed using the same parameters as those in Example 1, except that the distance y1 was set to 0.5 mm and the distance y2 was set to 0.5 mm.

### (Example 3)

An analysis was performed using the same parameters as those in Example 1, except that the distance y1 was set to 2.0 mm and the distance y2 was set to 2.0 mm.

### (Example 4)

An analysis was performed using the same parameters as those in Example 1, except that the distance y1 was set to 5.7 mm and the distance y2 was set to 5.7 mm. That is, the distance y1 was set to be equal to w1·cosθ1, and the distance y2 was set to be equal to w2·cosθ2.

### (Example 5)

An analysis was performed using the same parameters as those in Example 1, except that the distance y1 was set to 7.0 mm and the distance y2 was set to 7.0 mm. That is, the distance y1 was set to be greater than w1·cosθ1, and the distance y2 was set to be greater than w2·cosθ2.

### (Comparative Example 1)

An analysis was performed using the same parameters as those in Example 1, except that the distance y1 was set to 0 mm and the distance y2 was set to 0 mm.

The parameters and analysis results of the examples and the comparative example are illustrated in Table 1 and Table 2. In Table 2, "determination" is a determination result of the effect of increasing the air volume, and the comparison target is Comparative Example 1.

**Table 1**

| | L [mm] | w1 [mm] | w2 [mm] | w3 [mm] | y1 [mm] | y2 [mm] | θ1 [deg] | θ2 [deg] | θ3 [deg] | θ4 [deg] |
|---|---|---|---|---|---|---|---|---|---|---|
| Example 1 | 150 | 8 | 8 | 8 | 3.3 | 3.3 | 45 | 45 | 45 | 45 |
| Example 2 | 150 | 8 | 8 | 8 | 0.5 | 0.5 | 45 | 45 | 45 | 45 |
| Example 3 | 150 | 8 | 8 | 8 | 2.0 | 2.0 | 45 | 45 | 45 | 45 |
| Example 4 | 150 | 8 | 8 | 8 | 5.7 | 5.7 | 45 | 45 | 45 | 45 |
| Example 5 | 150 | 8 | 8 | 8 | 7.0 | 7.0 | 45 | 45 | 45 | 45 |
| Comparative Example 1 | 150 | 8 | 8 | 8 | 0 | 0 | 45 | 45 | 45 | 45 |

**Table 2**

| | w1·cosθ1 [mm] | W2·cosθ2 [mm] | Air volume Q [m3/min/m] | Determination |
|---|---|---|---|---|
| Example 1 | 5.7 | 5.7 | 13.0 | A |
| Example 2 | 5.7 | 5.7 | 17.6 | A |
| Example 3 | 5.7 | 5.7 | 17.0 | A |
| Example 4 | 5.7 | 5.7 | 14.1 | A |
| Example 5 | 5.7 | 5.7 | 14.4 | A |
| Comparative Example 1 | 5.7 | 5.7 | 19.0 | - |

In Comparative Example 1, an air volume of 19.0 m³/min/m was required to block the MD flow and bring the stagnation point position within 10 mm from the center line of the blowoff nozzle. In contrast, in Examples 1 to 5, an air volume of 13.0 to 17.6 m³/min/m was required, and the MD flow was blocked even with an air volume smaller than 19.0 m³/min/m. From the results, it was understood that, by providing the inscribed portions that are arranged to be spaced apart in the film conveyance direction and are inclined to approach each other inside the blowoff nozzle, it is possible to form the stagnation point pressure required for blocking the MD flow while reducing the air volume.

In Example 2, an air volume of 17.6 m³/min/m greater than 13.0 m³/min/m in Example 1 was required to block the MD flow and bring the stagnation point position within 10 mm from the center line of the blowoff nozzle. The reason is that, since the flow divider unit is close to the opening portion 222a, an amount of air that is merged inside the blowoff nozzle decreases, and the effect of increasing the air pressure is reduced. Considering that the air volume is 19.0 m³/min/m in Comparative Example 1 where the distance y1 and the distance y2 are 0 mm, it is understood that the distances y1 and y2 are desirably equal to or greater than 0.5 mm.

In Example 3, an air volume of 17.0 m³/min/m greater than 13.0 m³/min/m in Example 1 was required to block the MD flow and bring the stagnation point position within 10 mm from the center line of the blowoff nozzle. The reason is that, since the flow divider unit is close to the opening portion 222a, an amount of air that is merged inside the blowoff nozzle decreases, and the effect of increasing the air pressure is reduced. On the other hand, the MD flow was blocked with the air volume smaller than 17.6 m³/min/m in Example 2. Therefore, it was understood that the distances y1 and y2 are more desirably equal to or greater than 2 mm.

In Example 4, an air volume of 14.1 m³/min/m greater than 13.0 m³/min/m in Example 1 was required to block the MD flow and bring the stagnation point position within 10 mm from the center line of the blowoff nozzle. As described above, as the distances y1 and y2 are greater, the amount of air that is merged inside the blowoff nozzle is greater, and thus, the effect of increasing the air pressure is likely to be exerted, but as the merging point is farther from the opening portion, an influence of resistance flowing inside the blowoff nozzle after merging is greater, such that the air pressure that is increased once with merging is decreased, and the air volume required for blocking the MD flow is increased.

In Example 5, an air volume of 14.4 m³/min/m greater than 13.0 m³/min/m in Example 1 was required to block the MD flow and bring the stagnation point position within 10 mm from the center line of the blowoff nozzle, the pressure at the stagnation point fluctuated, and the MD flow blocking performance was unstable. In Example 4, as the MD flow was blocked with the air volume of 14.1 m³/min/m and the fluctuation of the stagnation point pressure was not observed, it was understood that the distance y1 and y2 are desirably equal to or less than w1cosθ1 and w2cosθ2, respectively.

### [Analysis Example 2]

In Analysis Example 2, for comparison of the individual performance of the blowoff nozzle 22, the parameters of the blowoff nozzle were set and the air pressure (air volume) was analyzed for the configuration of the embodiment described above using the same numerical analysis model as in Analysis Example 1 described above.

In the analysis, an air volume was calculated when the air pressure at the stagnation point described above is 60 Pa. Here, the outer boundary 51 and the inner boundary 61 were set to atmospheric pressure (0.1 MPa), and a boundary condition was set such that an air volume exhausted from the exhaust units E21 and E22 is zero. In respective examples, when the calculated air volume is smaller than that of a comparison target, since the effect of increasing the air volume as the blowoff nozzle is observed, the result was determined as **"A",** and when the calculated air volume is greater than that of the comparison target, since the effect of increasing the air volume as the blowoff nozzle is not observed, the result was determined as "B".

### (Example 6)

In the blowoff nozzle 22 illustrated in FIG. 2, an analysis was performed by setting the distance L to 150 mm, the distance w1 to 8 mm, the distance w2 to 8 mm, the distance w3 to 8 mm, the distance y1 to 3.3 mm, the distance y2 to 3.3 mm, the angle θ1 to 45 deg, the angle θ2 to 45 deg, the angle θ3 to 45 deg, and the angle θ4 to 45 deg.

### (Example 7)

An analysis was performed by making the center axis between the first flow divider unit 223 and the second flow divider unit 224 pass through a position downstream of the center of the opening portion 222a in the film conveyance direction. Specifically, the analysis was performed using the same parameters as those in Example 6, except that the distance w1 was set to 4 mm and the distance w2 was set to 12 mm.

### (Example 8)

An analysis was performed by making the distance y1 between the virtual plane S and the first inscribed portion 223b far away from each other. Specifically, the analysis was performed using the same parameters as those in Example 6, except that the distance w1 was set to 12 mm and the distance y1 was set to 8 mm.

### (Example 9)

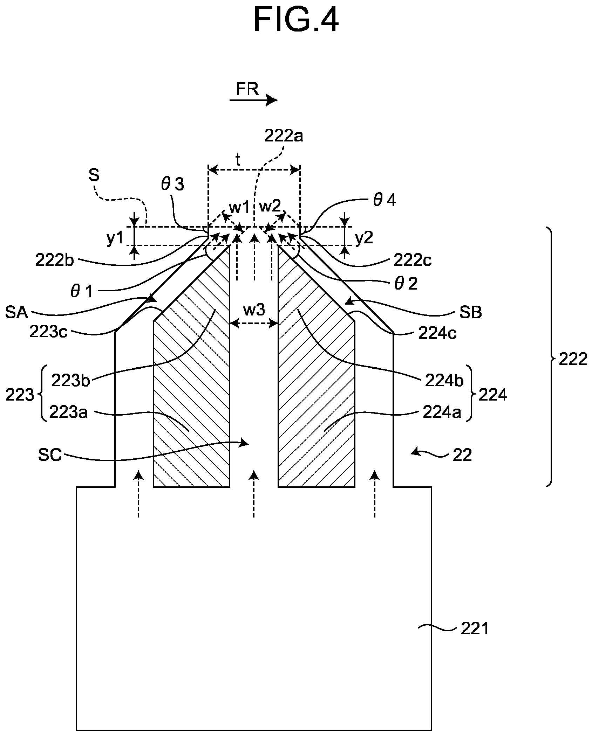

An analysis was performed for the blowoff nozzle 22 illustrated in FIG. 4. Specifically, the analysis was performed using the same parameters as those in Example 6, except that the angle θ3 was set to 90 deg and the angle θ4 was set to 90 deg.

### (Comparative Example 2)

An analysis was performed using the same parameters as those in Example 6, except that the distance y1 was set to 0 mm and the distance y2 was set to 0 mm.

### (Comparative Example 3)

An analysis was performed using the same parameters as those in Example 9, except that the distance y1 was set to 0 mm and the distance y2 was set to 0 mm.

The parameters and analysis results of the examples and the comparative examples are illustrated in Table 3 and Table 4. In Table 4, "determination" is a determination result of the effect of increasing the air volume, the comparison target of Examples 6 to 8 is Comparative Example 2, and the comparison target of Example 9 is Comparative Example 3.

**Table 3**

| | L [mm] | w1 [mm] | w2 [mm] | w3 [mm] | y1 [mm] | y2 [mm] | θ1 [deg] | θ2 [deg] | θ3 [deg] | θ4 [deg] |
|---|---|---|---|---|---|---|---|---|---|---|
| Example 6 | 150 | 8 | 8 | 8 | 3.3 | 3.3 | 45 | 45 | 45 | 45 |
| Example 7 | 150 | 4 | 12 | 8 | 3.3 | 3.3 | 45 | 45 | 45 | 45 |
| Example 8 | 150 | 12 | 8 | 8 | 8 | 3.3 | 45 | 45 | 45 | 45 |
| Example 9 | 150 | 8 | 8 | 8 | 3.3 | 3.3 | 45 | 45 | 90 | 90 |
| Comparative Example 2 | 150 | 8 | 8 | 8 | 0 | 0 | 45 | 45 | 45 | 45 |
| Comparative Example 3 | 150 | 8 | 8 | 8 | 0 | 0 | 45 | 45 | 90 | 90 |

**Table 4**

| | w1·cosθ1 [mm] | W2·cosθ2 [mm] | Air volume Q [m3/min/m] | Determination |
|---|---|---|---|---|
| Example 6 | 5.7 | 5.7 | 9.9 | A |
| Example 7 | 2.8 | 8.5 | 10.3 | A |
| Example 8 | 8.5 | 5.7 | 10.3 | A |
| Example 9 | 5.7 | 5.7 | 10.1 | A |
| Comparative Example 2 | 5.7 | 5.7 | 11.1 | - |
| Comparative Example 3 | 5.7 | 5.7 | 10.3 | - |

In Comparative Example 2, an air volume of 11.1 m³/min/m was required to form the stagnation point pressure of 60 Pa. In contrast, in Examples 6 to 8, an air volume of 9.9 to 10.3 m³/min/m was required, and the stagnation point pressure of 60 Pa was formed even with the air volume smaller than 11.1 m³/min/m. In Comparative Example 3, an air volume of 10.3 m³/min/m was required to form the stagnation point pressure of 60 Pa. In contrast, in Example 9, an air volume of 10.1 m³/min/m smaller than in Comparative Example 2 was required.

In Example 7, an air volume of 10.3 m³/min/m greater than 9.9 m³/min/m in Example 6 was required to form the stagnation point pressure of 60 Pa, and the stagnation point was formed at a position upstream of the center of the opening portion 222a by 30 mm in the film conveyance direction. The reason is that the air merged inside the blowoff nozzle 22 did not go straight toward the film. Therefore, it was understood that the center axis of the flow passage between the first inscribed portion 223b and the second inscribed portion 224b desirably passes through the center of the opening portion 222a in a cross-sectional view in the film width direction.

In Example 8, an air volume of 10.3 m³/min/m greater than 9.9 m³/min/m in Example 6 was required to form the stagnation point pressure of 60 Pa, and the stagnation point was formed at a position upstream of the center of the opening portion 222a by 2 mm in the film conveyance direction. The reason is that the air merged inside the blowoff nozzle 22 did not go straight toward the film. Therefore, it was understood that the distances y1 and y2 between the inscribed portions 223b and 224b and the virtual plane S are desirably equal to each other.

In Example 9, an air volume of 10.1 m³/min/m greater than 9.9 m³/min/m in Example 6 was required to form the stagnation point pressure of 60 Pa. The reason is that the side surfaces near the opening portion were not inclined, and thus a part of the air flowing through the flow passages SA and SB flowed along the side surfaces by the Coanda effect, the air was not allowed to concentrate toward the merging point, and the effect of the increase in air pressure was weakened. Therefore, it was understood that the two side surfaces of the blowoff nozzle near the virtual plane are desirably inclined to approach each other toward the virtual plane.

### Industrial Applicability

The blowoff nozzle of the present invention can be desirably applied to heating and stretching steps in a tenter oven of a film manufacturing facility, and the scope of application is not limited thereto.

### Reference Signs List

1 FILM MANUFACTURING APPARATUS
2 AIRFLOW CONTROL APPARATUS
3 TENTER OVEN
4 CONNECTING SECTION
20 BOX-SHAPED BODY
21 FIRST BLOWOFF NOZZLE (BLOWOFF NOZZLE)
22 SECOND BLOWOFF NOZZLE (BLOWOFF NOZZLE)
50 OUTER SPACE
51 OUTER BOUNDARY
60 INTERNAL SPACE
61 INNER BOUNDARY
100 FILM
221 PRESSURE EQUALIZING CHAMBER
222 BLOWOFF PORTION
222a OPENING PORTION
222b, 222c SIDE SURFACE
223, 224 FLOW DIVIDER UNIT
223a, 224a BASE PORTION
223b, 224b INSCRIBED PORTION
223c, 224c INCLINED SURFACE
B1, B2 BLOWER
D11, D12, D13, D21, D22, D23 DUCT
E1, E2 EXHAUST MECHANISM
E11, E12, E21, E22 EXHAUST UNIT
FR CONVEYANCE DIRECTION
H1, H2 HEAT EXCHANGER
S VIRTUAL PLANE
SA, SB, SC FLOW PASSAGE

## Claims

1. A blowoff nozzle that blows out air to a film being conveyed, the blowoff nozzle comprising:
first and second inscribed portions provided inside the blowoff nozzle, spaced apart in a film conveyance direction, and spaced from a virtual plane passing through an opening portion surface of an opening portion of the blowoff nozzle, the opening portion surface being a surface from which the air is blown out,
wherein the first and second inscribed portions have inclined surfaces inclined with respect to the virtual plane, respectively, and the two inclined surfaces are inclined to approach each other toward the virtual plane.

2. The blowoff nozzle according to claim 1,
wherein a distance y1 [mm] from the virtual plane to the first inscribed portion satisfies y1 ≥ 0.5 mm, and a distance y2 [mm] from the virtual plane to the second inscribed portion satisfies y2 ≥ 0.5 mm.

3. The blowoff nozzle according to claim 2,
wherein the distance y1 [mm], a distance w1 [mm] from an end of an inner wall surface of the blowoff nozzle on an opening portion side to the first inscribed portion, and an angle θ1 [deg] between the virtual plane and the inclined surface of the first inscribed portion satisfy y1 ≤ w1·cosθ1, and
the distance y2 [mm], a distance w2 [mm] from the end of the inner wall surface of the blowoff nozzle on the opening portion side to the second inscribed portion, and an angle θ2 [deg] between the virtual plane and the inclined surface of the second inscribed portion satisfy y2 ≤ w2·cosθ2.

4. The blowoff nozzle according to claim 1,
wherein, in a cross-sectional view viewed from a film width direction, a center axis of a flow passage between the first inscribed portion and the second inscribed portion passes through a center of the opening portion.

5. The blowoff nozzle according to claim 1,
wherein two side surfaces of the blowoff nozzle near the virtual plane are inclined surfaces inclined to approach each other toward the virtual plane.
